# EUROPÄISCHE PATENTSCHRIFT

(11) **EP 3 428 708 B1**
(45) Veröffentlichungstag und Bekanntmachung des Hinweises auf die Patenterteilung: **17.05.2023**
(21) Anmeldenummer: 17180546.8
(22) Anmeldetag: 10.07.2017
(51) Int. Cl.: G02B 7/00, G02B 21/24

(54) **VORRICHTUNG ZUR BEWEGUNG EINES OPTISCHEN ELEMENTS ENTLANG DER OPTISCHEN ACHSE EINES MIKROSKOPS**
DEVICE FOR MOVING AN OPTICAL ELEMENT ALONG THE OPTICAL AXIS OF A MICROSCOPE
DISPOSITIF DE DÉPLACEMENT D'UN ÉLÉMENT OPTIQUE LE LONG DE L'AXE OPTIQUE D'UN MICROSCOPE

(43) Veröffentlichungstag der Anmeldung: 16.01.2019
(73) Patentinhaber: FZMB GmbH Forschungszentrum für Medizintechnik und Biotechnologie, 99947 Bad Langensalza (DE)
(72) Erfinder: Heilemann, Wolfgang, 99441 Großschwabhausen (DE); Henze, Stephan, 99947 Bad Langensalza (DE); Correns, Nico, 99425 Weimar (DE); Miethe, Peter, 99947 Bad Langensalza (DE)
(74) Vertreter: dompatent von Kreisler Selting Werner - Partnerschaft von Patent- und Rechtsanwälten mbB

(56) Entgegenhaltungen:
- EP-A1- 2 120 081
- EP-A1- 2 240 810
- DE-A1-102011 121 928
- DE-U1- 20 106 831
- DE-U1- 20 106 834
- JP-A- H11 271 631

## Beschreibung

Die Erfindung betrifft eine Vorrichtung zur Bewegung eines optischen Elements entlang der optischen Achse eines Mikroskops.

Bei Mikroskopen, insbesondere bei automatisch arbeitenden Mikroskopen muss die Mikroskopoptik längs der optischen Achse bewegbar ausgeführt sein. Dazu wird eine vorzugsweise einachsige Führung mit Antrieb benötigt. Die Bewegung sollte in sehr kleinen Schritten erfolgen können. Das System sollte ferner eine hohe Funktionalität bei niedrigen Kosten aufweisen.

Im Stand der Technik sind Parallelogramm-Führungseinheiten für optische Elemente bei Mikroskopen bekannt, bei denen mit Blattfedern gearbeitet wird. Beispiele hierfür sind in EP-B-2 120 080 und US-B-8 964 287 beschrieben. US-B-9 201 234 zeigt ebenfalls eine Parallelogramm-Führungseinheit für optische Elemente, wobei die Federelemente monolithisch aus einem Stück mit dem Mikroskopoptik-Halteelementen gefertigt sind.

DE-U-201 06 831 zeigt eine Vorrichtung zur Feinpositionierung mit einem Doppelparallel-Federelement, das einen Rahmen, zwei Seitenbalken und einen Mittelbalken aufweist, wobei als Antriebselement ein Piezoelement mit integrierter Hebelübersetzung vorgesehen ist.

Mit den bekannten Systemen lässt sich die Mikroskopoptik nur mit recht großem Aufwand "feinfühlig" bewegen.

Aufgabe der Erfindung ist es, eine Vorrichtung zur Bewegung eines optischen Elements entlang der optischen Achse eines Mikroskops zu schaffen, bei der die Bewegung in kleinsten Schritten bzw. um kleinste Distanzen erfolgen kann.

Zur Lösung dieser Aufgabe wird mit der Erfindung eine Vorrichtung zur Bewegung eines optischen Elements entlang der optischen Achse eines Mikroskops vorgeschlagen, die versehen ist mit den Merkmalen des Anspruchs 1.

Einzelne Ausgestaltungen der Erfindung sind Gegenstand der Unteransprüche.

Bei der erfindungsgemäßen Vorrichtung wird eine Parallelogramm-Führungseinheit für das optische Element eingesetzt. Diese Parallelogramm-Führungseinheit ist im Mikroskop verbaut und weist ein Anbringungselement auf, zu dem beabstandet ein Halteelement angeordnet ist. Das Halteelement dient der Halterung des zu verstellenden optischen Elements. Anbringungselement und Halteelement sind durch zwei Verbindungsarme miteinander verbunden, wobei die gesamte Anordnung gelenkig bzw. beweglich und als Parallelogramm-Führungseinheit ausgeführt ist.

Erfindungsgemäß wird nun mittels eines Kurbelgetriebes auf diese Parallelogramm-Führungseinheit mittels eines Verstellhebels, der drehbar gelagert ist, eingewirkt, wodurch insgesamt ein Parallelkurbelgetriebe mit Verstellhebel gegeben ist. Der verschwenkbare Verstellhebel weist einen Lagerpunkt auf, an dem er drehbar gelagert ist. An einem Punkt des Verstellhebels, beispielsweise an seinem einen Ende, ist der Verstellhebel mit dem Halteelement gekoppelt (Koppelpunkt), während er an einem zweiten Punkt, nämlich dem Verstellpunkt, mit einem Verstellantrieb in Wirkverbindung steht. Hierzu weist das Anbringungselement einen sich in Richtung auf das Halteelement erstreckenden Lagerarm mit einem Drehlager für den Lagerpunkt des Verstellhebels auf, wobei das Drehlager des Lagerarms außerhalb des von der Parallelogramm-Führungseinheit eingenommenen Bereichs liegt.

Das Verstellhebel-Untersetzungsverhältnis wird bestimmt durch die Relativlage von Koppelpunkt, Verstellpunkt und Lagerpunkt des Verstellhebels.

In weiterer zweckmäßiger Ausgestaltung der Erfindung kann vorgesehen sein, dass die Verbindungsarme der Parallelogramm-Führungseinheit als Blattfedern ausgebildet sind, die an ihren Enden jeweils fest mit dem Anbringungselement und dem Halteelement verbunden sind. Dies hat den Vorteil, dass sich die Parallelogramm-Führungseinheit nach einer Auslenkung selbstständig in die Grundstellung zurückbewegt, und zwar in Folge der Blattfedern. Die Zurückbewegung in die Grundstellung erfolgt an sich über den Verstellantrieb, so dass die Blattfedern insoweit unterstützend wirken.

In weiterer zweckmäßiger Ausgestaltung der Erfindung kann vorgesehen sein, dass die Wirkverbindung zwischen dem Koppelpunkt des Verstellhebels und dem Halteelement als beweglich mit beiden verbundener Lenker ausgebildet ist.

Bei der zuvor genannten Variante ist es insbesondere von Vorteil, wenn der Lenker als Blattfeder aus einem Federstahlmaterial oder aus einem Formgedächtnislegierungs-Material ausgebildet ist, wobei die Blattfeder an ihren Enden fest mit dem Verstellhebel und dem Halteelement verbunden ist. Die Blattfeder, die den Lenker und damit die Kopplung zwischen Koppelpunkt des Verstellhebels mit dem Halteelement bildet, ist derart flexibel, so dass die tolerierbaren Bewegungen zum Verstellen der Parallelogramm-Führungseinheit in zuverlässiger Weise realisiert werden können. Überdies handelt es sich bei der Realisierung des Lenkers durch eine Blattfeder um eine spielfreie Ausführung der Wirkverbindung zwischen Verstellhebel und Halteelement. Wird als Material für die Blattfeder eine Formgedächtnislegierung verwendet, so ist die Elastizität der Blattfeder gegenüber Federstahl deutlich erhöht.

In weiterer vorteilhafter Ausgestaltung und Alternative zur Ausbildung eines Lenkers als Blattfeder kann die Wirkverbindung zwischen Verstellhabel und Halteelement auch dadurch bewirkt werden, dass der Verstellhebel an dem Halteelement anliegt, und zwar insbesondere an seinem einen Ende z. B. einen Stößel aufweist, der mit abgerundetem Ende auf das Halteelement einwirkt. Alternativ kann das Halteelement eine sphärische Kontaktfläche für den Verstellhebel aufweisen. Durch die sphärische Ausführung mindestens eines der beiden aneinanderliegenden Elemente (Verstellhebel (bzw. Stößel) und Halteelement) "rollen" sich beide gegeneinander ab, wenn der Verstellhebel verstellt wird. Bei dieser Ausgestaltung der Erfindung kann es von Vorteil sein, den Verstellhebel mittels einer Feder mit dem Halteelement zu verspannen, d. h. federnd zu verbinden (auf Zug), damit eventuelle Spiele minimiert bzw. verringert werden.

Insbesondere von Vorteil ist es, wenn der Verstellantrieb als Spindelantrieb oder Linearaktuator ausgeführt ist.

Die Erfindung wird nachfolgend anhand mehrerer Ausführungsbeispiele und unter Bezugnahme auf die Zeichnung näher erläutert. Im Einzelnen zeigen:
- Fig. 1: eine Schnittansicht der Parallelogramm-Führungseinheit mit um diese herum schematisch angedeuteten Elementen eines Mikroskops,
- Fig. 2: eine perspektivische Ansicht der Parallelogramm-Führungseinheit nach Fig. 1,
- Fig. 3: eine Schnittansicht der Parallelogramm-Führungseinheit gemäß Fig. 1, jedoch im Zustand der Verstellung des Verstellhebels,
- Fig. 4: eine alternative Ausführung einer Vorrichtung zur Bewegung eines optischen Elements, wobei die Parallelogramm-Führungseinheit einen Stößel zwischen Verstellhebel und Mikroskopoptik-Halteelement aufweist und
- Fig. 5: eine alternative Ausführung einer Vorrichtung zur Bewegung eines optischen Elements, wobei der Verstellhebel mittels eines gelenkig gelagerten starren Lenkers mit dem Mikroskopoptik-Halteelement verbunden ist.

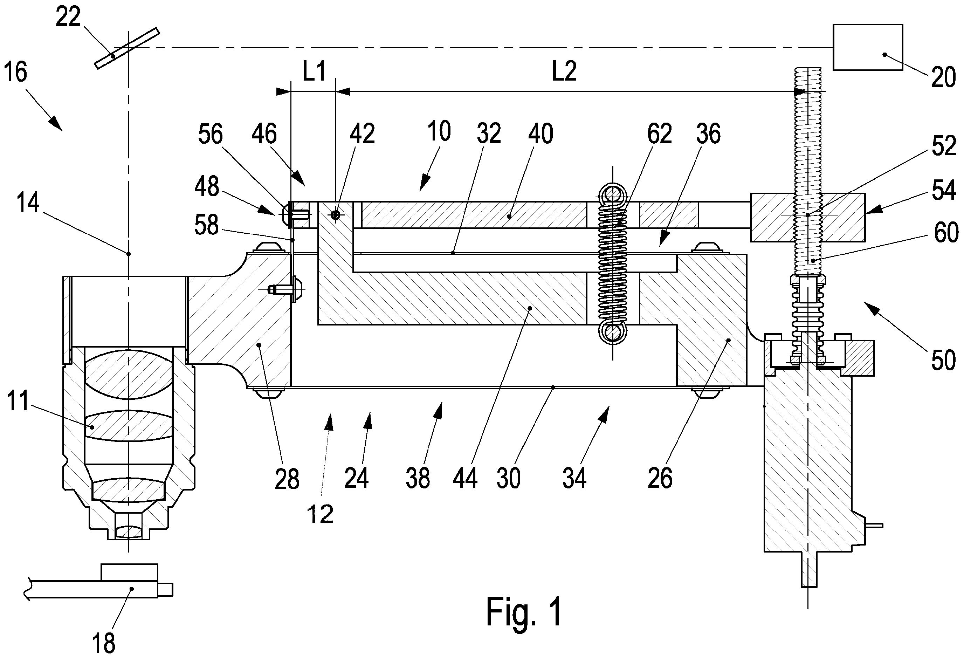

Fig. 1 zeigt schematisch den Aufbau eines ersten Ausführungsbeispiels einer Vorrichtung 10 zur Bewegung eines optischen Elements, nämlich in diesem Fall einer Mikroskopoptik 11 entlang der optischen Achse 14 eines Mikroskops 16. Als weitere Elemente dieses Mikroskops sind der Einfachheit halber noch ein Objektträger 18, ein Detektor 20 und eine Anzeige 22 schematisch gezeigt. Bei dem Mikroskop 16 handelt es sich beispielsweise um ein automatisiertes Fluoreszenzmikroskop zum Zählen von Bakterien, Zellen oder Mikropartikeln auf Objektträgern, Membranen und/oder Zählkammern. Die genaue Konstruktion des Mikroskops und sein Einsatzzweck sind für die erfindungsgemäße Vorrichtung 10 nicht entscheidend.

Die Vorrichtung 10 weist eine Parallelogramm-Führungseinheit 12 auf, die ein im Mikroskop zu fixierendes Anbringungselement 26 und ein die Mikroskopoptik 11 haltendes Halteelement 28 aufweist. Zwischen beiden erstrecken sich zwei Blattfedern 30, 32 als Verbindungsarme 34, 36. Die Blattfedern 30, 32 sind fest an dem Anbringungselement 26 und dem Halteelement 28 fixiert. Insoweit bildet die Parallelogramm-Führungseinheit 12 ein Parallelkurbelgetriebe 38.

Erfindungsgemäß ist nun dieses Parallelkurbelgetriebe 38 um einen Verstellhebel 40 erweitert. Der Verstellhebel 40 weist einen Lagerpunkt 42 auf, an dem er an einem in diesem Ausführungsbeispiel L-förmigen Arm 44 drehbar gelagert ist, der seinerseits in diesem Beispiel vom Anbringungselement 26 absteht. Der Lagerpunkt 42 und damit das Drehlager 46 befinden sich dabei recht nahe an dem Mikroskopoptik-Halteelement 28. An diesem Lagerpunkt 42 befindet sich ferner das eine Ende 48 des Verstellhebels 40, dessen anderes Ende 50 in Wirkverbindung mit einem Verstellantrieb 52 steht und somit einen Verstellpunkt 54 aufweist. Am zuvor genannten Ende 48 des Verstellhebels 40 befindet sich ein Koppelpunkt 56, der der Wirkverbindung des Verstellhebels 40 mit dem Halteelement 28 dient. Die Wirkverbindung wird in diesem Ausführungsbeispiel durch eine Blattfeder 58 realisiert, die fest eingespannt an ihren Enden einerseits mit dem Verstellhebel 40 und andererseits mit dem Halteelement 28 verbunden ist.

Der Verstellantrieb 52 ist in diesem Ausführungsbeispiel als Spindelantrieb 60 ausgebildet. Zwischen dem Verstellhebel 40 und dem Anbringungselement 26 befindet sich eine Zugfeder 62, die die Entstehung eines Spiels des Verstellantriebs 52 relativ zum Verstellhebel 40 verhindert.

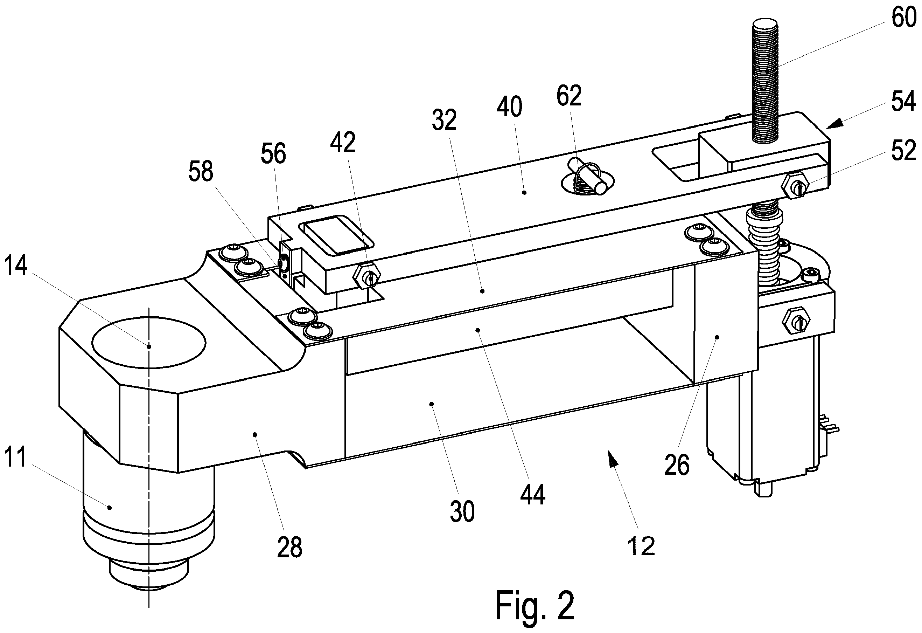

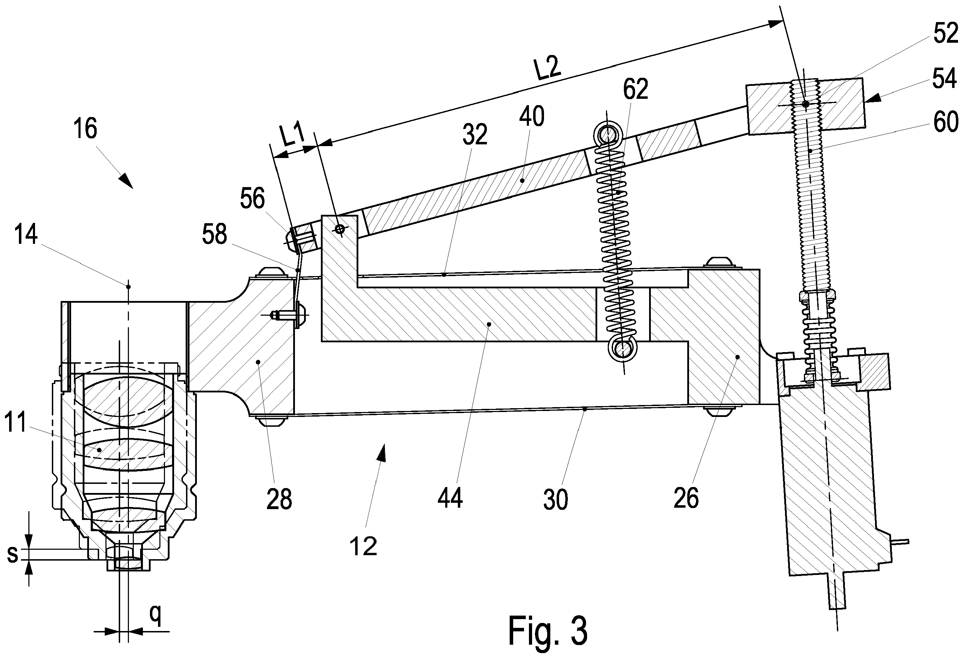

In Fig. 2 ist die Parallelogramm-Führungseinheit 12, d. h. das Parallelkurbelgetriebe 38 mit Verstellhebel 40 nochmals perspektivisch dargestellt. Während diese Einheit in den Fign. 1 und 2 in ihrer Ausgangsstellung gezeigt ist, zeigt Fig. 3 das Parallelkurbelgetriebe 38 mit verschwenktem Verstellhebel und damit das Halteelement 28 für die Mikroskopoptik 11 in seiner ausgelenkten Stellung. Zu erkennen ist, dass die Ausrichtung der Mikroskopoptik 11 parallel zur optischen Achse verbleibt, wobei die Mikroskopoptik 11 beim Verstellen seitlich versetzt zur optischen Achse bewegt wird, was aber für die im Mikroskop durchzuführenden Untersuchungen unkritisch ist.

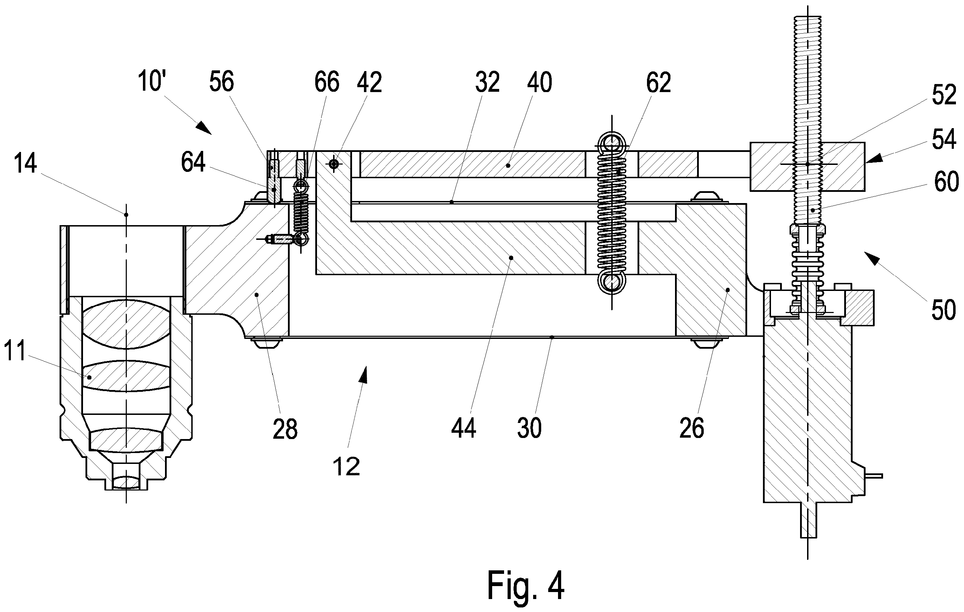

In Fig. 4 ist ein zweites Ausführungsbeispiel der Vorrichtung 10' gezeigt. Soweit die in Fig. 4 gezeigten Einzelelemente der Vorrichtung 10' mit denjenigen der Vorrichtung 10 konstruktions- bzw. funktionsgleich bzw. -ähnlich sind, sind sie in Fig. 4 mit den gleichen Bezugszeichen wie in den Fign. 1 bis 3 gekennzeichnet.

Der Unterschied der Vorrichtung 10' gegenüber der Vorrichtung 10 besteht in der Ausbildung der Wirkverbindung zwischen dem Koppelpunkt 56 des Verstellhebels 40 mit dem Mikroskop-Halteelement 28. Im Ausführungsbeispiel gemäß Fig. 4 befindet sich zwischen beiden ein Stößel 64. Zusätzlich ist eine Zugfeder 66 vorgesehen, die ebenfalls zwischen dem Verstellhebel 40 und dem Halteelement 28 wirkt. Durch die Zugfeder 66 wird das Halteelement 28 gegen den Verstellhebel 40 gespannt. Dadurch wird ein potentielles Spiel bei der Verstellung des Verstellhebels 40 und dessen Einwirkung auf das Halteelement 28 unterdrückt.

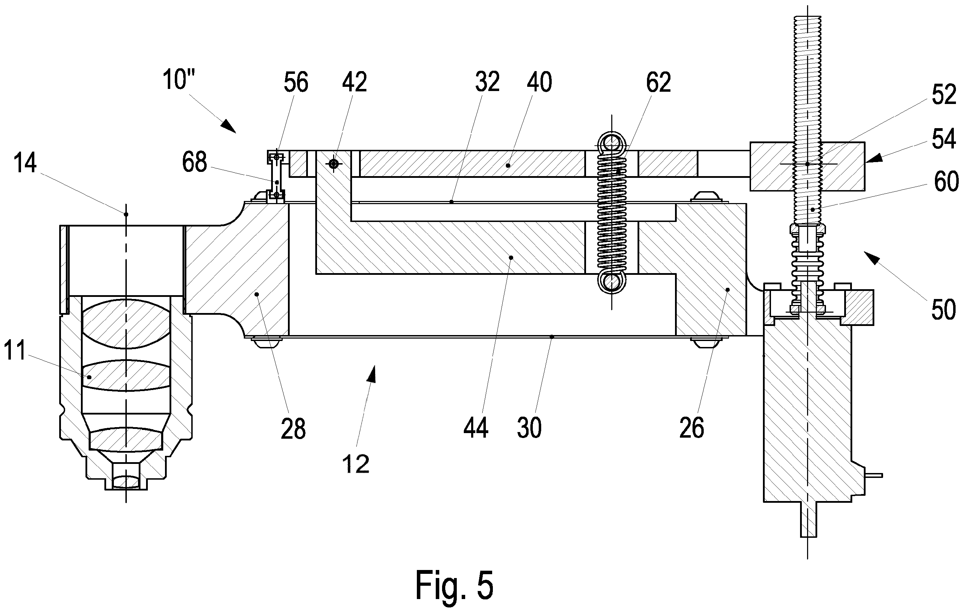

In Fig. 5 ist ein weiteres Ausführungsbeispiel der Verstellvorrichtung 10" gezeigt. Auch hier gilt, dass die in Fig. 5 gezeigten Einzelheiten der Vorrichtung 10" insoweit mit den gleichen Bezugszeichen wie in den Fign. 1 bis 3 gekennzeichnet sind, wie sie konstruktiv bzw. funktional gleiche bzw. ähnliche Teile zeigen.

Anstelle der Blattfeder bei der Vorrichtung 10 der Fign. 1 bis 3 wird bei dem Ausführungsbeispiel der Vorrichtung 10" nach Fig. 5 die mechanische Kopplung zwischen Verstellhebel 40 und Halteelement 28 durch einen Lenker 68 realisiert, der an seinen beiden Enden gelenkig mit einerseits dem Ende 48 des Verstellhebels 40 und andererseits mit dem Halteelement 28 verbunden ist.

Durch den erfindungsgemäß vorgesehenen Verstellhebel 40, dessen Untersetzungsverhältnis durch die in Fig. 1 mit L1 und L2 bezeichneten Längen definiert ist, lässt sich das Parallelkurbelgetriebe 38 um kleinste Distanzen auslenken bzw. verstellen, wie es insbesondere in der Anwendung als Vorrichtung zum Bewegen eines optischen Elements eines Mikroskops von Vorteil ist. Die möglichen Spiele werden einerseits durch die Federn 62 und, sofern vorhanden, 66 ausgeglichen und andererseits durch die Verwendung insbesondere eines Festkörpergelenks unterbunden. Als Festkörpergelenk ist insbesondere die Blattfeder 58 bei der Vorrichtung 10 nach Fig. 1 zu sehen. Wenn diese Blattfeder aus Formgedächtnislegierungsmaterial hergestellt ist, lässt sich der elastische Bereich der Blattfeder gegenüber Federstahlmaterial deutlich erweitern. Man spricht im Zusammenhang mit Formgedächtnislegierungen auch von "Superelastizität".

### BEZUGSZEICHENLISTE

- 10: Verstellvorrichtung
- 10': Verstellvorrichtung
- 10": Verstellvorrichtung
- 11: Mikroskopoptik
- 12: Parallelogramm-Führungseinheit
- 14: Achse
- 16: Mikroskop
- 18: Objektträger
- 20: Detektor
- 22: Anzeige
- 26: Anbringungselement
- 28: Mikroskopoptik-Halteelement
- 30: Blattfedern
- 32: Blattfedern
- 34: Verbindungsarm
- 36: Verbindungsarm
- 38: Parallelkurbelgetriebe
- 40: Verstellhebel
- 42: Lagerpunkt
- 44: Arm
- 46: Drehlager
- 48: Ende
- 50: Ende
- 52: Verstellantrieb
- 54: Verstellpunkt
- 56: Koppelpunkt
- 58: Blattfeder
- 60: Spindelantrieb
- 62: Zugfeder
- 64: Stößel
- 66: Zugfeder
- 68: Lenker

## Patentansprüche

1. Vorrichtung zur Bewegung eines optischen Elements entlang der optischen Achse eines Mikroskops, mit
- einer Parallelogramm-Führungseinheit (12) für das optische Element mit einem Anbringungselement (26) zur Montage in einem Mikroskop (16) oder als Teil eines Mikroskops (16) und mit einem von dem Anbringungselemente (26) beabstandeten Halteelement (28) für das optische Element des Mikroskops (16), wobei das Anbringungselement (26) und das Halteelement (28) durch zwei Verbindungsarme (34, 36) der Parallelogramm-Führungseinheit (12) verbunden sind, die an ihren Enden an dem Anbringungselement (26) und dem Halteelement (28) angeordnet sind,
- einem verschwenkbaren Verstellhebel (40) mit einem Lagerpunkt (42), an dem der Verstellhebel (40) drehbar gelagert ist, und
- einem Verstellantrieb (52) zum Verdrehen des Verstellhebels (40) um seinen Lagerpunkt (42),
- wobei der Verstellhebel (40) einen Koppelpunkt (56), an dem der Verstellhebel (40) zur Bewegung des Halteelements (28) mit diesem in Wirkverbindung steht, und einen Verstellpunkt (54) aufweist, an dem der Verstellhebel (40) mit dem Verstellantrieb (52) in Wirkverbindung steht,
**dadurch gekennzeichnet,**
- **dass** der Lagerpunkt (42) des Verstellhebels (40) zwischen dessen Koppelpunkt (56) und dessen Verstellpunkt (54) angeordnet ist und der Abstand L2 vom Verstellpunkt (54) zum Lagerpunkt (42) und der Abstand L1 vom Koppelpunkt (56) zum Lagerpunkt (42) ein Verstellhebel-Untersetzungsverhältnis aus dem Verschwenkweg des Verstellhebels (40) an dessen Verstellpunkt (54) zu dem Verschwenkweg des Verstellhebels (40) an dessen Koppelpunkt (56) definieren und
- **dass** das Anbringungselement (26) einen sich in Richtung auf das Halteelement (28) erstreckenden Lagerarm (44) mit einem Drehlager (46) für den Lagerpunkt (42) des Verstellhebels (40) aufweist, wobei das Drehlager (46) des Lagerarms (44) außerhalb des von der Parallelogramm-Führungseinheit (12) eingenommenen Bereichs liegt.

2. Vorrichtung nach Anspruch 1, **dadurch gekennzeichnet, dass** die Verbindungsarme (34, 36) der Parallelogramm-Führungseinheit (12) als Blattfedern (30, 32) ausgebildet sind, die an ihren Enden jeweils fest eingespannt mit dem Anbringungselement (26) und dem Halteelement (28) verbunden sind.

3. Vorrichtung nach Anspruch 1 oder 2, **dadurch gekennzeichnet, dass** die Wirkverbindung zwischen dem Koppelpunkt (56) des Verstellhebels (40) und dem Halteelement (28) als beweglich mit beiden verbundener Lenker (68) ausgebildet ist.

4. Vorrichtung nach Anspruch 3, **dadurch gekennzeichnet, dass** der Lenker (68) als Blattfeder (58) aus einem Federstahlmaterial oder aus einem Formgedächtnislegierungs-Material ausgebildet ist, wobei die Blattfeder (58) an ihren Enden fest eingespannt mit dem Verstellhebel (40) und dem Halteelement (28) verbunden ist.

5. Vorrichtung nach einem der Ansprüche 1 bis 3, **dadurch gekennzeichnet, dass** die Wirkverbindung zwischen dem Koppelpunkt (56) des Verstellhebels (40) und dem Halteelement (28) durch Anlage des Verstellhebels (40) an dem Halteelement (28), insbesondere durch Anlage des einen Endes des Verstellhebels (40) an dem Halteelement (28) ausgebildet ist.

6. Vorrichtung nach einem der Ansprüche 1 bis 5, **dadurch gekennzeichnet, dass** der Verstellantrieb (52) als Spindelantrieb (60) oder Linearaktuator ausgeführt ist.

## Claims

1. A device for moving an optical element along the optical axis of a microscope, comprising:
- a parallelogram guiding unit (12) for the optical element, having an mounting element (26) for mounting in a microscope (16) or as a part of a microscope (16) and having a holder element (28) for the optical element (26) of the microscope (16), which holder element (28) is spaced from the mounting element (26), the mounting element (26) and the holder element (28) being connected via two connecting arms (34, 36) of the parallelogram guiding unit (12) which are arranged, at their ends, at the mounting element (26) and the holder element (28),
- a pivotable adjustment lever (40) with a bearing point (42) at which the adjustment lever (40) is rotatably supported, and
- an adjustment drive (52) for rotating the adjustment lever (40) about its bearing point (42),
- the adjustment lever (40) having a coupling point (56) at which the adjustment lever (40) is operatively connected to the holder element (28) for moving the same, and having an adjustment point (54) at which the adjustment lever (40) is operatively connected to the adjustment drive (52),
**characterized in that**
- the bearing point (42) of the adjustment lever (40) is arranged between the coupling point (56) thereof and the adjustment point (54) thereof and the distance L2 from the adjustment point (54) to the bearing point (42) and the distance L1 from the coupling point (56) to the bearing point (42) define an adjustment lever reduction ratio of the pivot path of the adjustment lever (40) at the adjustment point (54) thereof to the pivot path of the adjustment lever (40) at the coupling point (56) thereof and
- the mounting element (26) comprises a bearing arm (44) extending towards the holder element (28) and having a pivot bearing (46) for the bearing point (42) of the adjustment lever (40), the pivot bearing (46) of the bearing arm (44) being located outside the region occupied by the parallelogram guiding unit (12).

2. The device according to claim 1, **characterized in that** the connecting arms (34, 36) by the parallelogram guiding unit (12) are formed as leaf springs (30, 32), each connected at its ends to the mounting element (26) and the holder element (28) in a firmly clamped manner.

3. The device according to any one of claims 1 or 2, **characterized in that** the operative connection between the coupling point (56) of the adjustment lever (42) and the holder element (28) is designed as a guide arm (68) movably connected to both.

4. The device according to claim 3, **characterized in that** the guide arm (68) is formed as a leaf spring (58) of a spring steel material or of a shape memory alloy material, the leaf spring (58) being connected at its ends to the adjustment lever (40) and the holder element (28) in a firmly clamped manner.

5. The device according to any one of claims 1 to 3, **characterized in that** the operative connection between the coupling point (56) of the adjustment lever (42) and the holder element (28) is realized by the abutment of the adjustment lever (40) on the holder element (28), in particular by the abutment of one end of the adjustment lever (40) on the holder element (28).

6. The device according to any one of claims 1 to 5, **characterized in that** the adjustment drive (52) is designed as a spindle drive (60) or a linear actuator.

## Revendications

1. Dispositif de déplacement d'un élément optique le long de l'axe optique d'un microscope, doté
- d'une unité de guidage en parallélogramme (12) pour l'élément optique avec un élément de fixation (26) pour montage dans un microscope (16) ou comme pièce d'un microscope (16) et avec un élément de maintien (28) à distance de l'élément de fixation (26) pour l'élément optique du microscope (16), dans lequel l'élément de fixation (26) et l'élément de maintien (28) sont reliés par deux bras de liaison (34, 36) de l'unité de guidage en parallélogramme (12), lesquels sont disposés à leurs extrémités sur l'élément de fixation (26) et sur l'élément de maintien (28),
- d'un levier de réglage pivotant (40) doté d'un point d'appui (42) sur lequel le levier de réglage (40) est disposé de manière rotative, et
- d'un entraînement de réglage (52) faisant tourner le levier de réglage (40) autour de son point d'appui (42),
- dans lequel le levier de réglage (40) comporte un point d'accouplement (56), sur lequel le levier de réglage (40) est en liaison opérationnelle avec l'élément de maintien (28) afin de déplacer celuici, et un point de réglage (54), sur lequel le levier de réglage (40) est en liaison opérationnelle avec l'entraînement de réglage (52),
**caractérisé**
- **en ce que** le point d'appui (42) du levier de réglage (40) est disposé entre le point d'accouplement (56) et le point de réglage (54) du levier de réglage et la distance L2 entre le point de réglage (54) et le point d'appui (42) et la distance L1 entre le point d'accouplement (56) et le point d'appui (42) définissent un rapport de réduction de levier de réglage entre la course de pivotement du levier de réglage (40) à son point de réglage (54) et la course de pivotement du levier de réglage (40) à son point d'accouplement (56) et
- **en ce que** l'élément de fixation (26) comporte un bras de palier (44) s'étendant dans la direction de l'élément de maintien (28) et doté d'un palier tournant (46) pour le point d'appui (42) du levier de réglage (40), dans lequel le palier tournant (46) du bras de palier (44) se trouve à l'extérieur de la zone occupée par l'unité de guidage en parallélogramme (12).

2. Dispositif selon la revendication 1, **caractérisé en ce que** les bras de liaison (34, 36) de l'unité de guidage en parallélogramme (12) sont réalisés comme ressorts à lame (30, 32), lesquels sont reliés et fermement serrés à leurs extrémités respectives à l'élément de fixation (26) et à l'élément de maintien (28).

3. Dispositif selon la revendication 1 ou 2, **caractérisé en ce que** la liaison opérante entre le point d'accouplement (56) du levier de réglage (40) et l'élément de maintien (28) est réalisée comme bielle (68) reliée de manière mobile à ceux-ci.

4. Dispositif selon la revendication 3, **caractérisé en ce que** la bielle (68) est réalisée comme ressort à lame (58) dont le matériau est de l'acier à ressort ou un alliage à mémoire de forme, dans lequel le ressort à lame (58) est relié et fermement serré à ses extrémités au levier de réglage (40) et à l'élément de maintien (28).

5. Dispositif selon l'une des revendications 1 à 3, **caractérisé en ce que** la liaison opérante entre le point d'accouplement (56) du levier de réglage (40) et l'élément de maintien (28) est réalisée par appui du levier de réglage (40) sur l'élément de maintien (28), en particulier par appui de l'une extrémité du levier de réglage (40) sur l'élément de maintien (28).

6. Dispositif selon l'une des revendications 1 à 5, **caractérisé en ce que** l'entraînement de réglage (52) est configuré comme entraînement à vis (60) ou comme actionneur linéaire.
